# EUROPÄISCHE PATENTSCHRIFT

(11) **EP 3 626 475 B1**
(45) Veröffentlichungstag und Bekanntmachung des Hinweises auf die Patenterteilung: **27.07.2022**
(21) Anmeldenummer: 19195100.3
(22) Anmeldetag: 03.09.2019
(51) Int. Cl.: B42D 25/24, B42D 25/324, B42D 25/346, B42D 25/36, B42D 25/425, B42D 25/455, B42D 25/46, B29C 65/08, B29C 65/00, B23K 20/10

(54) **VERFAHREN ZUR HERSTELLUNG EINER DATENSEITE SOWIE DATENSEITE FÜR EIN BUCHARTIGES DOKUMENT UND ULTRASCHALLVORRICHTUNG ZUM HERSTELLEN EINER SOLCHEN DATENSEITE**
METHOD FOR PRODUCING A DATA PAGE AND DATA PAGE FOR A BOOK DOCUMENT, AND ULTRASONIC DEVICE FOR PRODUCING SUCH A DATA PAGE
PROCÉDÉ DE FABRICATION D'UNE PAGE DE DONNÉES AINSI QUE PAGE DE DONNÉES POUR UN DOCUMENT DE TYPE LIVRE ET DISPOSITIF ULTRASONORE PERMETTANT DE FABRIQUER UNE TELLE PAGE DE DONNÉES

(30) Priorität: 20.09.2018 DE 102018123119
(43) Veröffentlichungstag der Anmeldung: 25.03.2020
(73) Patentinhaber: Bundesdruckerei GmbH, 10969 Berlin (DE)
(72) Erfinder: Siebert, Martin, 10965 Berlin (DE)
(74) Vertreter: Patentanwälte Mammel und Maser PartG mbB

(56) Entgegenhaltungen:
- DE-A1- 2 726 137
- DE-A1-102012 213 913

## Beschreibung

Die Erfindung betrifft ein Verfahren zur Herstellung einer Datenseite sowie eine Datenseite für ein buchartiges Dokument und eine Ultraschallvorrichtung zur Herstellung einer solchen Datenseite.

Aus der DE 10 2017 202 267 A1 ist ein Verfahren zur Herstellung eines Sicherheitsmerkmals in einem Datenträger bekannt, bei dem eine Lasche aus einem Gewebe mit einer Kunststoffschicht eines Datenträgers verbunden wird, wobei das Kunststoffmaterial des Datenträgers die Maschen des Gewebes vollständig durchdringt und die Fasern des Gewebes nach dem Durchdringen vollständig umschließt. Auf das Kunststoffmaterial, welches die Fasern vollständig umschließt, kann eine Bedruckung mit mindestens einer Tintenzubereitung erfolgen. Alternativ kann auch eine Prägung in einer Oberfläche des Kunststoffmaterials im Überlappungsbereich des Datenträgers erfolgen.

Aus der US 2016/0355 045 A1 ist ein buchartiges Dokument bekannt, welches eine Datenseite umfasst, bei der eine aus einem Gewebematerial bestehende Lasche mit einem Datenträger verbunden ist. Das Gewebe kann eine eingeprägte Kante aufweisen, welche die Kante des Gewebes versiegelt und verstärkt sowie als Sicherheitsmerkmal dient. Zur Stabilisierung des Gewebes kann dieses mit einer Polymerbeschichtung gefüllt werden.

Aus der EP 2 433 809 A1 ist eine Datenseite für ein buchartiges Dokument sowie ein Verfahren zu dessen Herstellung bekannt. Eine Lasche zum Anbinden an eine Datenseite kann Einschnitte in der Lasche, Prägungen auf der Lasche oder Aufdrucke auf der einen oder auf beiden Seiten der Lasche aufweisen.

Aus der DE 10 2010 039 003 A1 ist eine Vorrichtung zum Schweißen und Prägen dünnwandiger Werkstücke mittels Ultraschall bekannt. Dieses Werkzeug umfasst eine Sonotrode, welche einen Schweißbereich und einen Prägebereich umfasst, die durch eine Profilierung gebildet sind. Die Arbeitsfläche des Schweißbereiches als auch die Arbeitsfläche des Prägebereiches liegen in einer Ebene.

Aus der DE 10 2012 213 913 A1 ist ein Verfahren zur Herstellung einer Datenseite für ein buchartiges Dokument bekannt. Bei diesem Verfahren werden ein Datenträger und eine Lasche aus einem textilen Material zueinander ausgerichtet, sodass sich die Lasche und der Datenträger in einem Überlappungsbereich überlappen. Durch eine Ultraschallvorrichtung werden die Lasche und der Datenträger im Überlappungsbereich miteinander verbunden. Über eine Sonotrode der Ultraschallvorrichtung wird über Vorsprünge als Energierichtungsgeber zumindest eine äußere Schicht des Datenträgers an- oder aufgeschmolzen, um die Lasche mit dem Datenträger zu verschweißen. Während diesem Verbinden wird die Sonotrode gegen einen Amboss der Ultraschallvorrichtung gedrückt, wobei der Amboss und die Sonotrode auf den Überlappungsbereich einwirken.

DE 10 2012 213 913 A1 offenbart den Oberbegriff des Anspruchs 1.

Aus der DE 27 26 137 A1 ist ein Verfahren zum Betrieb eines mit einer elektrischen Wechselspannung in Resonanz zu erregenden elektromechanischen Schwingers bekannt. Dieser elektromechanische Schwinger wird zum Ultraschallschweißen von dünnen Kunststoffbändern eingesetzt.

Aus der DE 10 2014 217 716 A1 ist des Weiteren ein Verfahren zur Herstellung einer Datenseite sowie eine Datenseite bekannt. Im Überlappungsbereich wird die aus textilem Material bestehende Lasche mit der zumindest einen äußeren Schicht des Datenträgers verbunden. Dabei wird die zumindest eine äußere Schicht angeschmolzen und die Lasche aus textilem Material zumindest teilweise eingedrückt. Zur Erhöhung der Sicherheit einer solchen Datenseite wird in die Lasche eine Solltrennlinie in Form einer Aufreihung von Perforationen beziehungsweise Löchern eingebracht, wobei diese Solltrennlinie in die Lasche vor dem Verbinden der Lasche mit dem Datenträger eingebracht ist. Vor dem Verbinden der Lasche mit dem Datenträger wird die Lasche mit der darin eingebrachten Solltrennlinie derart zum Datenträger ausgerichtet, dass diese Solltrennlinie außerhalb des Überlappungsbereichs verläuft und den Überlappungsbereich zu einem Verbindungsbereich trennt. Der Verbindungsbereich wird durch den frei gegenüber dem Datenträger hervorstehenden Abschnitt der Lasche gebildet und dient zum Einhängen der Datenseite in das buchartige Dokument oder an einen Buchblock. Durch diese Sollbruchstelle wird bei einer Manipulation der Datenträger von dem Verbindungsbereich der Lasche getrennt.

Der Erfindung liegt die Aufgabe zugrunde, ein Verfahren zur Herstellung einer Datenseite sowie eine Datenseite für ein buchartiges Dokument als auch eine Ultraschallvorrichtung zum Verschweißen einer Lasche aus einem textilen Material mit einem Datenträger vorzuschlagen, wodurch eine Manipulation durch Ablösen der Lasche vom Datenträger im Überlappungsbereich erschwert wird.

Diese Aufgabe wird durch ein Verfahren zur Herstellung einer Datenseite für ein buchartiges Dokument gelöst, bei welchem die Lasche im Überlappungsbereich mit dem Datenträger durch eine Sonotrode verbunden wird und bei welchem mit einer Sonotrode der Ultraschallvorrichtung, welche eine Vielzahl von Vorsprüngen mit einer Anpressfläche aufweist, auf die Lasche im Überlappungsbereich eingewirkt und der Datenträger durch den Amboss der Ultraschallvorrichtung abgestützt wird, wobei zumindest eine äußere Schicht des Datenträgers angeschmolzen wird und zumindest teilweise in die Öffnungen des textilen Materials hineinfließt und Verbindungsstellen gebildet werden, wobei zumindest ein Prägeelement mit einer Prägefläche innerhalb des Überlappungsbereichs auf das textile Material der Lasche zugeführt wird und zumindest eine Prägung in den Überlappungsbereich eingebracht wird. Dabei wird eine Sonotrode zur Bildung der Sollbruchstelle eingesetzt, bei der die Prägefläche des Prägeelements gegenüber einer durch die Anpressfläche der Vorsprünge gebildeten Arbeitsebene hervortritt, sodass die Prägefläche höher als die Anpressfläche der Vorsprünge ausgebildet ist. Dadurch wird eine erhöhte Druckkraft auf das textile Material mittels der Prägefläche aufgebracht und eine verstärkte Quetschung beziehungsweise ein verstärktes seitliches Verdrängen des aufgeschmolzenen Materials der zumindest einen äußeren Schicht erzielt. Dadurch kann der Grad der Schwächung des textilen Materials beziehungsweise der Reißfestigkeit der Sollbruchstelle bestimmt werden. Durch diese Bearbeitung wird eine gezielte Vorschädigung des textilen Materials ermöglicht. Diese Vorschädigung kann eine Schwächung des textilen Materials durch eine Verringerung des Querschnitts des textilen Materials umfassen. Auch kann diese Schwächung eine Verformung oder Zugbelastung des textilen Materials umfassen. Des Weiteren kann die Vorschädigung des textilen Materials auch das Einbringen einer Kerbe in das textile Material umfassen. In allen Fällen wird durch die Vorschädigung des textilen Materials eine Sollbruchstelle im textilen Material geschaffen. Bei einer Manipulation, durch welche ein Ablösen der Lasche vom Datenträger erfolgt, wird die Lasche sich an der oder den Sollbruchstellen vom Datenträger ablösen. Das gequetschte und/oder gekerbte textile Material im Bereich der Prägung ist mit einem erhöhten Druck im Überlappungsbereich eingebracht und verbleibt bei einem Manipulationsversuch. Dadurch ist die Manipulation in einfacher Weise optisch sichtbar.

Eine erste Ausführungsform des Verfahrens sieht vor, dass die Sonotrode zusätzlich zu der Vielzahl von Vorsprüngen zumindest eine Prägung umfasst und in einem gemeinsamen Arbeitsschritt die Verbindungsstellen hergestellt und die zumindest eine Prägung eingebracht werden. Die Einbringung der Verbindungsstellen zum sicheren Anbinden der Lasche an den Datenträger kann beibehalten werden, wobei zusätzlich durch das zumindest eine an der Sonotrode vorgesehene Prägeelement gleichzeitig die zumindest eine Prägung eingepresst wird. Aufgrund der Erweichung und der Anschmelzung der zumindest einen äußeren Schicht kann dadurch das Einbringen der zumindest einen Prägung begünstigt sein.

Alternativ kann mit der Sonotrode, welche eine Vielzahl von Vorsprüngen umfasst, die Verbindungsstellen im Überlappungsbereich zur Anbindung der Lasche am Datenträger gebildet werden und in einem nachfolgenden Arbeitsschritt eine Sonotrode mit dem zumindest einen Prägeelement dem Überlappungsbereich zugeführt und die zumindest eine Prägung im Überlappungsbereich eingebracht wird. Auch ein solches zweistufiges Verfahren ermöglicht das Einbringen von zumindest einer Sollbruchstelle durch die zumindest eine Prägung. Dabei kann in einem ersten Arbeitsschritt die herkömmliche Technologie zum Verbinden der Lasche mit dem textilen Material beibehalten werden.

Bevorzugt ist die Prägefläche des Prägeelements größer als die Anpressfläche der jeweiligen Vorsprünge ausgebildet, wodurch ein erhöhter Druck auf die Lasche und die Datenseite im Überlappungsbereich aufgebracht wird. Dadurch wird das aufgeschmolzene Material der zumindest einen äußeren Datenseite seitlich verdrängt, welches zum Randbereich und darüber hinaus fließt. Dies ermöglicht, dass in einem Verfahrensschritt einerseits eine feste Verbindung im Überlappungsbereich zwischen dem textilen Material und der zumindest einen äußeren Schicht der Datenseite erzielt und andererseits eine Quetschung des textilen Materials zur Bildung der Sollbruchstelle eingebracht wird.

Des Weiteren wird bevorzugt außerhalb einer Prägekante der Prägung eine wulstförmige Materialanhäufung durch das aufgeschmolzene und verdrängte Material der zumindest einen äußeren Schicht des Datenträgers gebildet. Dadurch wird die Sollbruchstelle verstärkt, da im Übergang zwischen dem durch die Prägefläche des Prägeelements gequetschten Bereich und dem nicht gequetschten Bereich das textile Material geschwächt und teilweise freigelegt ist und somit die Sollbruchstelle gebildet wird.

Des Weiteren wird das Prägeelement mit einer Prägekante ausgebildet, bei der eine Umfangsfläche des Prägeelements zur Prägefläche in einem Kantenwinkel kleiner als ein Kantenwinkel zwischen der Anpressfläche und der Umfangsfläche der Vorsprünge ausgebildet ist. Dadurch wird die Prägekante des Prägeelements scharfkantiger als die Kante zwischen der Anpressfläche und der Umfangsfläche der Vorsprünge ausgebildet. Beim Einbringen der Prägung wird eine Kerbwirkung auf das textile Material bewirkt, wohingegen die Vorsprünge nicht zu einer Vorschädigung des textilen Materials führen, sondern vielmehr nur die Verbindungsstellen gebildet werden, um eine feste und dauerhafte Anbindung der Lasche an den Datenträger zu ermöglichen.

Des Weiteren werden bevorzugt ein Datenträger mit zumindest einer äußeren Schicht und eine Lasche aus einem textilen Material miteinander verbunden, bei welchen der Schmelzpunkt oder die Erweichungstemperatur des textilen Materials höher als der Schmelzpunkt oder die Erweichungstemperatur der zumindest einen äußeren Schicht des Datenträgers ist. Dadurch wird ermöglicht, dass die zumindest eine äußere Schicht anschmilzt und in die Öffnungen des textilen Materials zumindest teilweise eindringt oder diese vollständig füllt. Das textile Material wird nicht erweicht oder angeschmolzen und kann gezielt durch den aufgebrachten Druck und/oder die Temperatur des zumindest einen Prägeelements zumindest geschwächt werden.

Bevorzugt wird durch die Sonotrode der Ultraschallvorrichtung ein Energieeintrag auf den Überlappungsbereich angesteuert, sodass die zumindest eine äußere Schicht des Datenträgers zumindest anschmilzt und das textile Material der Lasche nicht erweicht. Dadurch kann die Abrissfestigkeit der Lasche zum Datenträger im Überlappungsbereich erhöht bleiben.

Des Weiteren kann durch die Prägefläche des Prägeelements das angeschmolzene Material der zumindest einen äußeren Schicht des Datenträgers zunächst seitlich verdrängt und darauffolgend das textile Material durch die Prägefläche im Überlappungsbereich perforiert werden. Dabei wird die Sollbruchstelle durch die Bruchlinie gebildet. Optisch kann diese Bruchlinie zunächst unsichtbar sein. Bei einer Manipulation wird jedoch das perforierte und in die Datenseite eingepresste textile Material im Überlappungsbereich sichtbar.

Die der Erfindung zugrundeliegende Aufgabe wird des Weiteren durch eine Datenseite für ein buchartiges Dokument gelöst, bei welchem ein Datenträger und eine Lasche aus einem textilen Material in einem Überlappungsbereich durch Verschweißen miteinander verbunden sind, wobei zumindest eine äußere Schicht des Datenträgers zumindest teilweise Öffnungen des textilen Materials der Lasche füllt und eine Vielzahl von Verbindungsstellen zwischen dem textilen Material und der zumindest einen äußeren Schicht des Datenträgers bildet, wobei im Überlappungsbereich zusätzlich zur Vielzahl der Verbindungsstellen zumindest eine Prägung im textilen Material der Lasche eingebracht ist, welches eine Sollbruchstelle aufweist. Das textile Material ist dadurch im Überlappungsbereich mit unterschiedlichen Festigkeiten in der zumindest einen äußeren Schicht des Datenträgers eingebunden. Des Weiteren kann durch die Einbringung der zumindest einen Prägung eine Vorschädigung des textilen Materials erfolgen. Diese Vorschädigung kann durch eine Quetschung und/oder Kerbung und/oder einer Dehnung, insbesondere plastischen Verformung, erfolgen. Bei einem Manipulationsversuch durch Erwärmen kann der weniger fest eingebrachte Bereich der Lasche am Datenträger abgelöst werden, jedoch verbleibt der stärker eingebrachte Bereich des textilen Materials in der zumindest einen äußeren Schicht des Datenträgers aufgrund der Sollbruchstelle im Überlappungsbereich. Die Sollbruchstelle ist im Übergangsbereich zwischen einer vertieften Einprägung der Prägung und dem benachbarten Bereich der Lasche, in dem die Verbindungsstellen eingebracht sind. Die Manipulation wird sichtbar. Diese eingebrachte Sollbruchstelle weist des Weiteren den Vorteil auf, dass diese in einem optischen Designelement oder einer Prägung, wie beispielsweise einer Zahl, einem Buchstaben, einem Bild oder einer beliebigen Kombination hierzu, enthalten ist, ohne dass diese Sollbruchstellen in offensichtlicher Weise sichtbar ist.

Die zumindest eine Prägung ist gegenüber den Verbindungsstellen im Überlappungsbereich vertieft eingebracht. Dadurch kann zusätzlich zur Ausbildung von zumindest einer Sollbruchstelle gleichzeitig auch ein sogenanntes Designelement geschaffen werden. Beispielsweise können der Name des Landes oder sonstige Symbole eingebracht sein.

Bevorzugt wird die Sollbruchstelle des textilen Materials im Überlappungsbereich entlang eines Übergangsbereichs eingebracht, der zwischen der Vielzahl von Verbindungsstellen und einer zumindest in die Lasche eingebrachten Prägung verläuft. Diese Prägung wird durch die Prägefläche des Prägeelements einer Sonotrode eingebracht. Die Prägung kann eine einzelne Zahl, ein einzelner Buchstabe, ein einzelnes Bild sein. Die Prägung kann auch eine beliebige Kombination hiervon darstellen.

Die Prägung ist bevorzugt teilweise oder vollständig von den Verbindungsstellen zum Verbinden des textilen Materials der Lasche mit dem Datenträger umgeben. Eine solche Integration erhöht die Fälschungssicherheit.

Eine weitere bevorzugte Ausgestaltung der Datenseite sieht vor, dass zumindest eine äußere Schicht des Datenträgers aus einem Polymer aus einer Gruppe ausgewählt ist, welche Polycarbonat, insbesondere Bisphenol-A-Polycarbonat oder ein Polycarbonat gebildet mit einem Geminal Disubstituierten Bis (Hydroxphenyl(-cyloalkn), einem Polyethylenterephthalat (PET), deren Derivate, insbesondere glykolmodifiziertes PET (PETG) und/oder Polyvinylchlorid, umfasst.

Die Lasche ist bevorzugt aus Polyamid, Polyester, Acrylnitril-(co-), Polymerisate oder Glasfasern gebildet, wobei insbesondere das Gewebe auf Basis von Monofilamenten hergestellt ist.

Dieses textile Material besteht bevorzugt aus Monofilamenten. Diese Monofilamente eignen sich besonders zur Quetschung oder Schwächung und somit zur Bildung der Sollbruchstelle.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
- Figur 1: eine perspektivische Darstellung eines buchartigen Dokumentes,
- Figur 2: eine schematische Ansicht auf eine Datenseite gemäß Figur 1,
- Figur 3: eine schematisch vergrößerte Schnittansicht entlang der Linie II-II in Figur 2,
- Figur 4: eine schematische Ansicht auf eine Lasche gemäß dem vergrößerten Detail X in Figur 2,
- Figur 5: eine schematische Schnittansicht entlang der Linie II-II in Figur 2 gemäß einer alternativen Ausführungsform zu Figur 3,
- Figur 6: eine schematische Schnittansicht einer Lasche mit einem Datenträger während dem Verbinden mit einer Ultraschallvorrichtung,
- Figur 7: eine schematische Ansicht auf eine mit einem Datenträger verbundene Lasche,
- Figur 8: eine schematische Schnittansicht durch eine Prägung im Überlappungsbereich der Lasche,
- Figur 9: eine schematisch vergrößerte Ansicht einer Ausgestaltung des Vorsprungs und des Prägeelements an der Sonotrode,
- Figur 10: eine schematische Seitenansicht einer Sonotrode mit einem Druckverlauf auf die Lasche während dem Anbinden der Lasche an den Datenträger,
- Figur 11: eine schematische Seitenansicht einer weiteren Ausführungsform der Sonotrode gemäß Figur 6, und
- Figur 12: eine schematische Seitenansicht einer weiteren alternativen Ausführungsform der Sonotrode zu Figur 11.

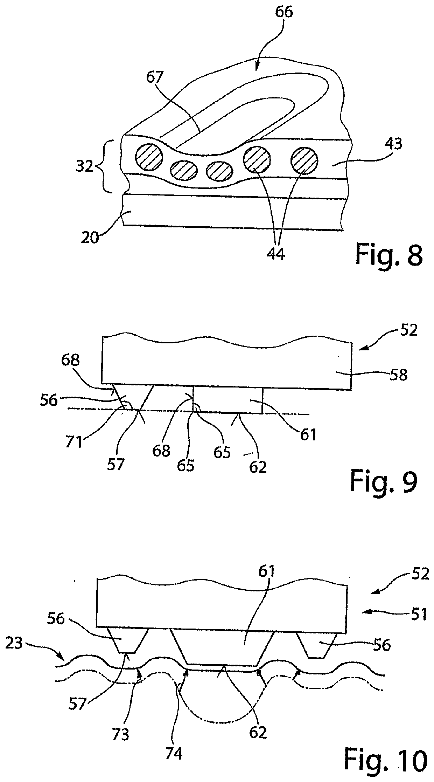

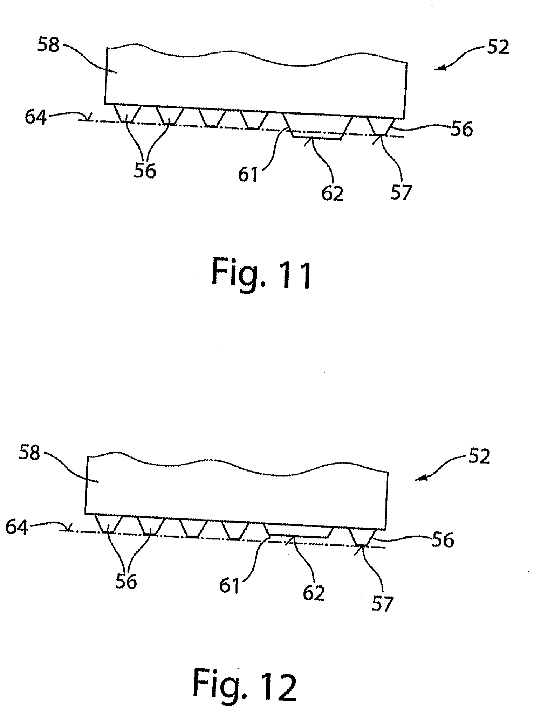

Die Ausführungsformen der Figuren 10 und 11 zeigen die Erfindung. Die Ausführungsformen der anderen Figuren erleichtern das Verständnis der Erfindung.

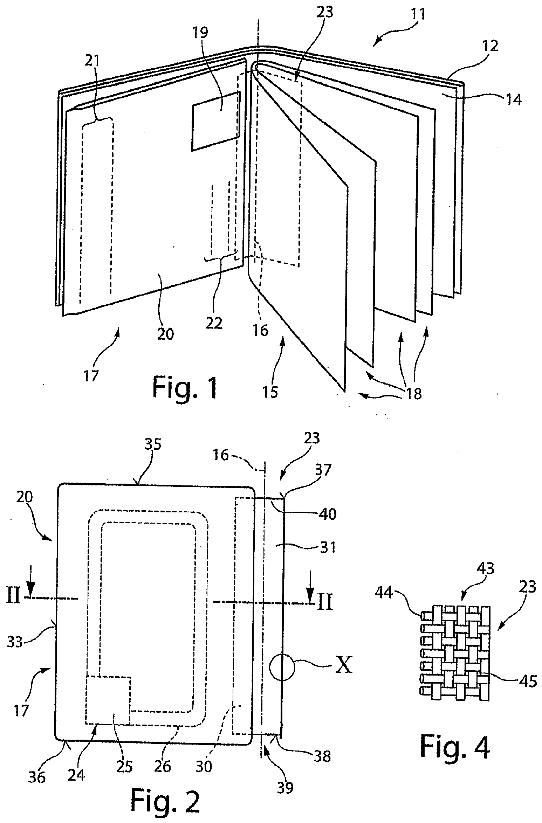

In Figur 1 ist ein buchartiges Dokument 11, insbesondere Sicherheitsdokument, perspektivisch dargestellt. Bei diesem buchartigen Dokument 11 handelt es sich beispielsweise um ein Identifikationsdokument wie einen Reisepass. Das Dokument 11 umfasst beispielsweise einen Bucheinband 12. Auf einer Innenseite des Bucheinbandes 12 kann ein Vorsatz 14 vorgesehen sein, der am Bucheinband 12 befestigt ist. Über eine Naht 16 sind eine Datenseite 17 und eine oder mehrere Innenseiten 18 miteinander zu einem Buchblock 15 verbunden. Sofern ein Bucheinband 12 und insbesondere der Vorsatz 14 vorgesehen sind, kann dieser Vorsatz 14 oder dieser Vorsatz 14 zusammen mit dem Bucheinband 12 auch mit der Naht 16 zum Buchblock 15 verbunden werden. Die Innenseiten 18 des buchartigen Dokuments 11 können beispielsweise zur Aufnahme von Visa, Stempeln oder sonstigen Eintragungen dienen. Die Datenseite 17 besteht aus einem Datenträger 20 und einer daran befestigten Lasche 23. Die Datenseite 17, insbesondere der Datenträger 20, kann beispielsweise gemäß dem ICAO-Standard, insbesondere gemäß ICAO Doc 9303, 7. Auflage, ausgebildet sein und ein Bild 19 des Dokumenteninhabers, eine OCR-lesbare ICAO- Zone 21 (auch "Maschinenlesbare Zone" oder engl. "Machine Readable Zone", MRZ, genannt) sowie weitere Personalisierdaten 22 umfassen. Die Personalisierdaten 22 sind innerhalb des Datenträgers 20 vorgesehen. Die Lasche 23 des Datenträgers 20 erstreckt sich über die Naht 16 hinweg. Diese Lasche 23 umfasst auch einen Nahtbereich, in dem die Naht 16 gebildet ist. Zusätzlich oder alternativ kann zur Naht 16 noch eine Klebe- und/oder Schweißverbindung vorgesehen sein, um die Lasche 23 in das buchartige Dokument 11, insbesondere den Buchblock 15, einzubinden.

In Figur 2 ist schematisch eine Seitenansicht auf die Datenseite 17 dargestellt. Der Datenträger 20 kann beispielsweise ein Transpondermodul 24 umfassen, welches einen IC-Chip 25 sowie eine Antenne 26 umfasst. Darüber hinaus oder alternativ können weitere elektronische und/oder sonstige Sicherheitselemente, insbesondere diffraktive Sicherheitselemente, ein- und/oder aufgebracht werden.

Die Lasche 23 ist unter Bildung eines Überlappungsbereichs 30 mit dem Datenträger 20 verbunden. Die Lasche 23 umfasst ein gewebeförmiges Bandmaterial, welches vorzugsweise durch Schweißen mit einer äußersten Schicht oder Lage des Datenträgers 20 verbunden ist. Insbesondere kann die Lasche 23 aus dem gewebeförmigen Bandmaterial, vorzugsweise einem PET-Gewebe, bestehen. Hinsichtlich der Anbindung der Lasche 23 des gewebeförmigen Bandmaterials für die Lasche 23 als auch des Datenträgers 20 sowie dem Aufbau des Datenträgers 20 wird vollumfänglich auf die DE 10 2012 213 913 A1 Bezug genommen.

Die Datenseite 17 weist eine obere und untere Stirnkante 35, 36 auf. Die Lasche 23 weist eine Oberkante und Unterkante beziehungsweise eine obere und untere Stirnseite 37, 38 auf, die gegenüber den Stirnkanten 35, 36 nach innen zurückversetzt sein kann.

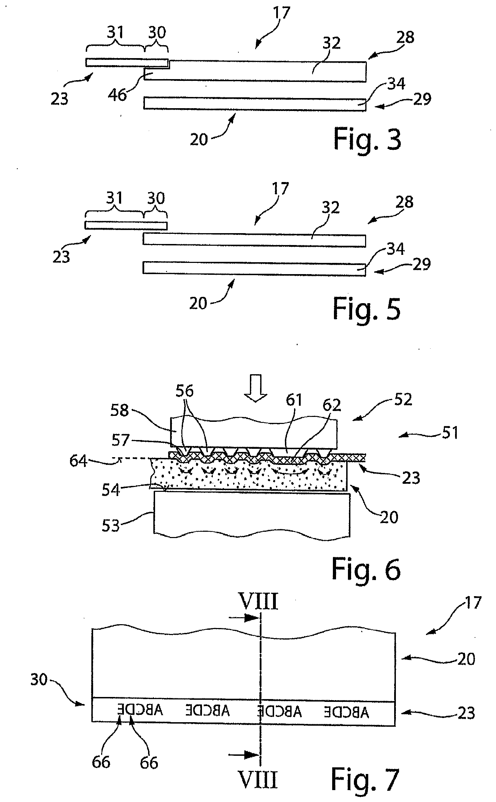

In Figur 3 ist eine schematische Schnittansicht entlang der Linie II-II in Figur 2 gemäß einem ersten beispielhaften Aufbau der Datenseite 17 vor dem Laminieren dargestellt. Nach der Lamination sind alle Lagen oder Schichten des Datenträgers 20 sowie die Lasche 23 zu einer Datenseite 17 miteinander verbunden. Insbesondere ist ein monolithischer Aufbau gegeben.

Der Datenträger 20 umfasst ein Vorderseitenheft 28 sowie ein Rückseitenheft 29, wobei beispielsweise auf dem Vorderseitenheft 28 die Lasche 23 aufgebracht ist. Dadurch ist ein Überlappungsbereich 30 gebildet. Diesem gegenüberliegend ist ein herausragender Bereich 31 gebildet, entlang dessen die Naht 16 zum Einbinden der Lasche 23 in das Dokument 11 verläuft. Das Vorderseitenheft 28, welches auch als Datenseitenheft bezeichnet werden kann, umfasst zumindest eine Schicht 32. Die Schicht 32 kann auch bedruckbar sein. Bevorzugt sind mehrere Schichten zur Bildung des Vorderseitenhefts 28 vorgesehen, wie beispielsweise eine Drucklage, die opak ausgebildet sein kann, wobei eine weitere Schicht auf der Drucklage aufgebracht ist, die vorteilhafterweise transparent ist.

Das Rückseitenheft 29 kann ebenso zumindest eine Schicht 34 umfassen oder einen analogen oder abweichenden Aufbau zum Vorderseitenheft 28 aufweisen. Das Vorderseiten- und/oder Rückseitenheft 28, 29 kann verschiedene Sicherheitsmerkmale umfassen, wie beispielsweise ein CLI-Merkmal (Changeable Laser Image) oder ein MLI (Multiple Laser Image) als auch Druckbilder mit optisch variabler Farbe (OVF) oder dergleichen.

Die zumindest eine Schicht 32 des Vorderseitenheftes 28 und/oder die zumindest eine Schicht 34 des Rückseitenheftes 29 können aus einem oder mehreren Kunststoffen (Polymeren) hergestellt sein. Insbesondere umfassen diese Polycarbonat (PC) oder bestehen aus PC. Weitere Alternativen können sein: Bisphenol-A-Polycarbonat, Carboxy-modifiziertes PC, Polyethylenterephthalat (PET), dessen Derivaten wie Glycolmodifiziertem PET (PETG), Polyvinylchlorid (PVC), Polyvinylbutyral (PVB), Polymethylmethacrylat (PMMA), Polyimid (PI), Polybutylenterephthalat (PBT), Polyvinylalkohol (PVA), Polystyrol (PS), Polyvinylphenol (PVP), Polypropylen (PP), Polyethylen (PE), thermoplastischen Elastomeren (TPE), insbesondere thermoplastisches Polyurethan (TPU), Acrylnitril-Butadien-Styrol-Copolymer (ABS), und/oder deren Derivaten, oder aus Papier und/oder Pappe oder aus Mischungen der vorgenannten Materialien.

Die Lasche 23 ist gemäß dem Detail X in Figur 2 vergrößert in einer Draufsicht in Figur 4 dargestellt. Gemäß dieser Ausführungsform ist die Lasche 23 als ein Gewebe ausgebildet. Dieses Gewebe kann Schuss- und Kettfäden 43, 44 umfassen. Diese sind bevorzugt als Monofilamente ausgebildet. Zwischen den Kett- und Schussfäden 43, 44 sind Gewebeöffnungen 45 gebildet.

Als gewebeförmiges Bandmaterial für die Lasche 23 wird bevorzugt ein thermoplastischer Kunststoff, insbesondere ein Polyester, beispielsweise Polyethylenterephthalat (PET), eingesetzt. Der Schmelzpunkt oder die Glasübergangstemperatur des schmelzbaren Materials des gewebeförmigen Bandmaterials ist vorzugsweise an die Materialeigenschaften des Datenträgers 20 angepasst. Die Schmelz- und/oder Glasübergangstemperatur der Lasche 23 und die Schmelz- und/oder Glasübergangstemperatur des Datenträgers 20 sind aufeinander abgestimmt, sodass beim Verbinden der Lasche 23 mit dem Datenträger 20 das gewebeförmige Bandmaterial der Lasche 23 noch nicht erweicht ist, jedoch zumindest die Schicht 32, sodass die Gewebeöffnung 45 zumindest durch das erweichte Material der Schicht 32 gefüllt und/oder umschlossen werden. Das textile Material der Lasche 34 kann auch aus Glasfasern gebildet sein.

Aus der schematischen Schnittansicht gemäß Figur 3 geht hervor, dass die Lasche 23 einseitig auf die Oberseite der Schicht 32 aufgebracht ist, wobei in diesem Ausführungsbeispiel die Schicht 32 einen Aufnahmebereich 46 umfasst. Dieser Aufnahmebereich 46 ist durch eine Reduzierung der Wandstärke der Schicht 32 gebildet. Dies ermöglicht prinzipiell eine nahezu stufenfreie Einbindung der Lasche 23 im Überlappungsbereich 30 zu einer daran angrenzenden Oberfläche der Schicht 32 des Datenträgers 20. Analog kann die Lasche 23 auch an der Schicht 34 angebunden sein.

In Figur 5 ist eine alternative Ausführungsform zur Anbringung der Lasche 23 auf dem Datenträger 20 zur Bildung der Datenseite 17 dargestellt. Der Aufnahmebereich 46 ist nicht vorgesehen. In Abhängigkeit der Maschenweite der Lasche 23 und/oder des Druckes eines Laminierwerkzeuges oder Schweißwerkzeuges wird die Lasche 23 im Überlappungsbereich 30 nach dem zumindest teilweise Anschmelzen oder Aufschmelzen der Lasche 23 und/oder der Schicht 32 in diese einpenetriert.

In Figur 6 ist eine schematische Schnittansicht des Überlappungsbereichs 30 während dem Verbinden der Lasche 23 mit dem Datenträger 20 durch eine Ultraschallvorrichtung 51 dargestellt. Die Ultraschallvorrichtung 51 umfasst eine Sonotrode 52 sowie dieser gegenüberliegend einen Amboss 53. Dieser Amboss 53 weist eine Widerlagerfläche 54 auf. Auf dieser Widerlagerfläche 54 liegt der Datenträger 20 mit einer Unterseite auf.

Die Sonotrode 52 umfasst eine Vielzahl von Vorsprüngen 56, die jeweils eine Anpressfläche 57 aufweisen. Diese Vorsprünge 56 mit der Anpressfläche 57 sind bevorzugt pyramidenstumpfförmig oder kegelstumpfförmig ausgebildet. Eine Vielzahl von in Reihen und Spalten zueinander ausgerichteten oder auch ungeordnet zueinander ausgerichteten Vorsprüngen 56 ist an der Sonotrode 52 vorgesehen. Diese Vorsprünge 56 weisen eine Höhe gegenüber einem Sonotrodengrundkörper 58 von 0,2 bis 0,5 mm auf. Der Abstand zwischen den Vorsprüngen 56 beträgt vorzugsweise zwischen 0,5 und 1 mm. Durch die Vorsprünge 46 wird eine Vielzahl von Verbindungsstellen 59 geschaffen. Durch diese Verbindungsstellen 59 ist die Lasche 23 an den Datenträger 20 angebunden. Bevorzugt ist die zumindest eine äußere Schicht 32 aufgeschmolzen und füllt zumindest teilweise die Gewebeöffnungen 45 des textilen Materials. Bevorzugt dringt die äußere Schicht 32 durch die Gewebeöffnungen 45 hindurch und bildet eine die Kett- und Schussfäden 44, 45 überdeckende Schicht.

Die Sonotrode 52 kann sich mit dem Sonotrodengrundkörper 58 über die gesamte Breite als auch über die gesamte Länge des Überlappungsbereiches erstrecken, sodass mit einem Ultraschallschweißvorgang ein Verbinden der Lasche 23 an dem Datenträger 20 im Überlappungsbereich 30 ermöglicht ist. Alternativ kann die Sonotrode 52 auch kleinere Abmessungen als der Überlappungsbereich 30 aufweisen, sodass die Lasche 23 in mehreren Schritten mit dem Datenträger 20 verbunden wird.

Die Sonotrode 52 weist zusätzlich zu den Vorsprüngen 56 zumindest ein Prägeelement 61 mit einer Prägefläche 62 auf. Im Ausführungsbeispiel in Figur 6 ist die Höhe des Prägeelements 61 gleich mit den Vorsprüngen 56, sodass die Anpressfläche 57 der Vorsprünge 56 und die Prägefläche 62 des zumindest einen Prägeelements 61 in einer gemeinsamen Arbeitsebene 64 liegen.

Durch die Prägefläche 62 des Prägeelements 61 wird zumindest eine Prägung 66 in die Lasche 23 eingebracht, wie dies beispielsweise in einer Draufsicht in Figur 7 dargestellt ist. Die Prägung 66 kann beispielsweise ein einziger Buchstabe sein, wie beispielsweise der Buchstabe "E". Die Prägung 66 kann auch durch Zahlen, Symbole, Bilder oder sonstige Informationen ausgebildet sein, welche visuell erkennbar sind. Auch kann die Prägung 66 aus einer Kombination von Zahlen, Buchstaben, Bildern, Symbolen oder sonstigen Informationen sein.

Die Prägefläche 62 des Prägeelements 61 ist gemäß einer ersten Ausführungsform größer als die Anpressfläche 57 des Vorsprungs 45 ausgebildet. Dadurch wird beim Verschweißen der Lasche 23 mit dem Datenträger 20 durch die Ultraschallvorrichtung 51 ein erhöhter Druck auf den Bereich des textilen Materials der Lasche 23 unterhalb der Prägefläche 62 aufgebracht. Dieser erhöhte Druck führt zu einem Quetschen der angeschmolzenen äußeren Schicht 32 des Datenträgers 20, welche seitlich nach außen fließt. An dem Rand der Prägefläche 62 anschließend wird eine umlaufende Wulst aufgrund des sich ansammelnden Materials gebildet. Entlang einer Prägekante 63 der Prägefläche 62 wird eine Sollbruchstelle 67 in das textile Material der Lasche 23 eingebracht. Diese Sollbruchstelle 67 wird durch ein Verringern des Querschnitts im textilen Material und/oder durch eine Einkerbung erzielt. Dieses textile Material kann entlang der Sollbruchstelle 67 plastisch verformt und/oder geschwächt sein. Auch kann eine Schwächung durch Versprödung der Fasern des textilen Materials gegeben sein.

Durch diese Ultraschallvorrichtung 51 wird somit ein Anbinden des textilen Materials der Lasche 23 an den Datenträger 20 mit voneinander abweichenden Festigkeiten erzielt. Durch die Vorsprünge 56 werden Verbindungsstellen zwischen dem textilen Material und der angeschmolzenen Schicht 32 gebildet, die eine definierte Abzugsfestigkeit aufweisen. Im Bereich der Prägefläche 62 weist das textile Material zur äußeren Schicht 32 des Datenträgers 20 eine gegenüber den Verbindungsstellen 59 erhöhte Abzugsfestigkeit auf. Im Übergangsbereich 30 und/oder benachbart zu den Verbindungsstellen 59 ist die Sollbruchstelle 67 (Figur 8) gebildet, sodass bei einem Manipulationsversuch zum Ablösen der Lasche 23 vom Datenträger 20 ein Ablösen der Lasche 23 entlang der Sollbruchstelle 67 erfolgt. Ein Bereich des textilen Materials, der die erhöhte Abzugsfestigkeit aufweist, verbleibt am Datenträger 20.

In Figur 8 ist eine schematische Schnittansicht durch die Prägung 66 gemäß Figur 7 dargestellt. Im Bereich der Prägung 66, welche die durch die Prägefläche 62 des Prägeelements 61 gebildet ist, sind die Kett- und/oder Schussfäden 43, 44 plastisch verformt oder geschwächt oder eingekerbt. Beispielsweise sind die Kett- und Schussfäden 43, 44 im Querschnitt verringert gegenüber den benachbarten nicht durch die Prägefläche 62 des Prägeelements 61 beaufschlagten Kett- oder Schussfäden 43, 44. In einem Übergangsbereich zwischen dem verformten textilen Material und dem nicht gequetschten textilen Material ist die Sollbruchstelle 67 ausgebildet. Diese Sollbruchstelle 67 kann auch eine Einkerbung aufweisen.

In Figur 9 ist eine schematisch vergrößerte Ansicht der Sonotrode 52 dargestellt, wobei beispielhaft nur ein Vorsprung 56 und nur ein Prägeelement 61 dargestellt ist. Das Prägeelement 61 ist durch die Prägefläche 62 und eine Umfangsfläche 68 gebildet, zwischen denen die Prägekante 63 verläuft. Im Ausführungsbeispiel ist die Umfangsfläche 68 zur Prägefläche 62, welche in der Arbeitsebene 64 liegt, in einem Kantenwinkel 65 von 90° ausgebildet. Alternativ kann der Kantenwinkel 65 kleiner als 90° ausgebildet sein. In diesem Fall ist die Prägekante 63 durch einen spitzen Winkel gebildet. Die Umfangsfläche 68 bildet eine Hinterschneidung zum Sonotrodengrundkörper 58.

Alternativ kann der Kantenwinkel 65 auch größer als 90° ausgebildet sein. Die Umfangsfläche 68 ist zur Prägefläche 62 in einem stumpfen Winkel angeordnet.

Beim Vorsprung 56 ist die Anpressfläche 57, welche ebenfalls in der Arbeitsebene 64 liegt oder zu dieser ausgerichtet ist, und eine Umfangsfläche 68 in einem Kantenwinkel 71 von größer 60° ausgerichtet. Der Kantenwinkel 71 der Vorsprünge 56 ist bevorzugt größer als der Kantenwinkel 65 des Prägeelements 61.

In Figur 10 ist eine schematische Seitenansicht der Sonotrode 52 während eines Arbeitsschrittes zum Anbinden der Lasche 23 an die zumindest eine äußere Schicht 32 des Datenträgers 20 dargestellt. Nachdem die Schicht 32 angeschmolzen ist, kann das textile Material in die äußere Schicht 32 eingedrückt werden. Dabei kann sich der in Figur 10 gebildete Verlauf darstellen. Durch die Anpressfläche 57 des Vorsprungs 56 und die Prägefläche 62 des Prägeelements 61 wird ein definiertes Einpressen erzielt. In den dazwischenliegenden Freiräumen kann das textile Material durch eine Wellenform in der Schicht 32 eingebunden sein.

Unterhalb dem Verlauf des textilen Materials der Lasche 23 ist eine Druckverlaufskurve 72 strichliniert dargestellt. Im Randbereich der Anpressfläche 57 des Vorsprungs 56 wirkt gemäß dem Kraftvektor 73 eine geringere Kraft als im Bereich der Prägekante 63 des Prägeelements 61, welche durch den Kraftvektor 74 dargestellt ist. Aufgrund der größeren Prägefläche 62 und/oder des geringeren Kantenwinkels 65 und/oder einer gegenüber der Arbeitsebene 64 hervortretenden Prägefläche 62 des Prägeelements 61 kann der erhöhte Druckverlauf gegenüber den Vorsprüngen 56 erzielt werden.

In Figur 11 ist eine alternative Ausführungsform der Sonotrode zu Figur 6 dargestellt. Bei dieser Ausführungsform steht die Prägefläche 62 des Prägeelements 61 gegenüber der Arbeitsebene 64 hervor. Das Maß des Überstandes der Prägefläche 62 gegenüber der Arbeitsebene 64 verstärkt das Quetschen des textilen Materials am Rand oder den Kanten der Prägefläche 62. Die Prägefläche 62 kann gleich groß oder größer als die Anpressfläche 57 sein. Dadurch kann eine mehr empfindliche Sollbruchstelle geschaffen sein. Beispielsweise kann ein Überstand der Prägefläche 62 des Prägeelements 61 im Bereich von 0,1 mm genügen, um eine erhöhte Quetschung zu erzielen. Bei einem größeren Überstand der Prägefläche 62 gegenüber der Anpressfläche 57 kann die Prägefläche 62 auch kleiner als die Anpressfläche 57 ausgebildet sein.

Alternativ kann die Prägefläche 62 des Prägeelements 61 gegenüber der Arbeitsebene 64 zurückversetzt sein. Dies ist in Figur 12 dargestellt. Insbesondere bei sehr großflächigen Prägeflächen 62, die beispielsweise zwei oder mehrfach größer als die Anpressfläche 57 der Vorsprünge 56 sind, kann dies von Vorteil sein. Dies beruht darauf, dass aufgrund der größeren Flächen eine erhöhte Quetschung und Verdrängung des geschmolzenen Materials erforderlich ist.

**Bezugszeichenliste**

| | | | |
|---|---|---|---|
| 11. | Buchartiges Dokument | 38. | Stirnseite von 23 |
| 12. | Bucheinband | 43. | Kettfäden |
| 14. | Vorsatz | 44. | Schussfäden |
| 15. | Buchblock | 45. | Gewebeöffnungen |
| 16. | Naht | 46. | Aufnahmebereich |
| 17. | Datenseite | 51. | Ultraschallvorrichtung |
| 18. | Innenseite | 52. | Sonotrode |
| 19. | Bild | 53. | Amboss |
| 20. | Datenträger | 54. | Widerlagerfläche |
| 21. | ICAO-Zone | 56. | Vorsprung |
| 22. | Personalisierdaten | 57. | Anpressfläche |
| 23. | Lasche | 58. | Sonotrodengrundkörper |
| 24. | Transpondermodul | 59. | Verbindungsstellen |
| 25. | IC-Chip | 61. | Prägeelement |
| 26. | Antenne | 62. | Prägefläche |
| 28. | Vorderseitenheft | 63. | Prägekante |
| 29. | Rückseitenheft | 64. | Arbeitsebene |
| 30. | Überlappungsbereich | 65. | Kantenwinkel |
| 31. | Herausragender Bereich | 66. | Prägung |
| 32. | Schicht | 67. | Sollbruchstelle |
| 34. | Schicht | 68. | Umfangsfläche |
| 35. | Obere Stirnkante | 71. | Kantenwinkel von 56 |
| 36. | Untere Stirnkante | 73. | Kraftvektor |
| 37. | Stirnseite von 23 | 74. | Kraftvektor |

## Patentansprüche

1. Verfahren zur Herstellung einer Datenseite (17) für ein buchartiges Dokument (11),
- bei dem ein Datenträger (20) und eine Lasche (23) aus einem textilen Material zueinander ausgerichtet werden, sodass die Lasche (23) und der Datenträger (20) sich in einem Überlappungsbereich (30) überlappen,
- bei dem mit einer Ultraschallvorrichtung (51) die Lasche (23) und der Datenträger (20) im Überlappungsbereich (30) miteinander verbunden werden,
- bei dem mit einer Sonotrode (52) der Ultraschallvorrichtung (51), welche eine Vielzahl von Vorsprüngen (56) mit einer Anpressfläche (57) aufweisen, auf die Lasche (23) im Überlappungsbereich (30) eingewirkt und der Datenträger (20) durch einen Amboss (53) der Ultraschallvorrichtung (51) abgestützt wird, wobei zumindest eine äußere Schicht (32) des Datenträgers (20) angeschmolzen wird und zumindest teilweise in die Öffnungen (48) des textilen Materials hineinfließt und Verbindungsstellen (59) gebildet werden,
- bei dem zumindest ein Prägeelement (61) mit einer Prägefläche (62) innerhalb des Überlappungsbereiches (30) auf das textile Material der Lasche (23) zugeführt und zumindest eine Prägung (66) eingebracht wird, wobei
- durch die Lage der zumindest einen Prägefläche (62) des zumindest einen Prägeelements (61) das textile Material der Lasche (23) im Querschnitt verringert wird, **dadurch gekennzeichnet, dass** die Sonotrode (52) zur Bildung einer Sollbruchstelle (67) eingesetzt wird, bei der die Prägefläche (62) des Prägeelementes (61) gegenüber einer durch die jeweilige Anpressfläche (57) der Vorsprünge (56) gebildeten Arbeitsebene (64) hervortritt, sodass das Prägeelement (61) höher als die Vorsprünge ausgebildet ist und eine erhöhte Verdrängung des aufgeschmolzenen Materials der zumindest einen äußeren Schicht (32) des Datenträgers (20) angesteuert wird.

2. Verfahren nach Anspruch 1, **dadurch gekennzeichnet, dass** mit der Sonotrode (52), welche zusätzlich zur Vielzahl von Vorsprüngen (56) zumindest ein Prägeelement (61) umfasst, in einem gemeinsamen Arbeitsschritt die Verbindungsstelle (59) hergestellt und die zumindest eine Prägung (66) eingebracht wird oder dass mit der Sonotrode (52), welche nur eine Vielzahl von Vorsprüngen (56) umfasst, die Verbindungsstelle (59) im Überlappungsbereich (30) zwischen der Lasche (23) und der äußeren Schicht (32) des Datenträgers (20) gebildet und in einem nachfolgenden Arbeitsschritt eine Sonotrode mit dem zumindest einen Prägeelement (61) dem Überlappungsbereich (30) zugeführt und die zumindest eine Prägung (66) eingebracht wird.

3. Verfahren nach Anspruch 1, **dadurch gekennzeichnet, dass** durch die Prägefläche (62) des Prägeelements (61), welche größer als die Anpressfläche (57) der Vorsprünge (56) ist, ein erhöhter Druck auf die Lasche (23) und die Datenseite (20) im Überlappungsbereich (30) aufgebracht wird und das aufgeschmolzene Material der zumindest einen äußeren Schicht (17) des Datenträgers (20) seitlich zum Randbereich der Prägefläche (62) verdrängt wird, und vorzugsweise außerhalb einer Prägekante (63) der Prägung (66) eine wulstförmige Materialanhäufung durch das aufgeschmolzene und verdrängte Material der zumindest einen äußeren Schicht des Datenträgers (20) gebildet wird.

4. Verfahren nach einem der vorhergehenden Ansprüche, **dadurch gekennzeichnet, dass** das Prägeelement (61) mit einer Prägekante (65) ausgebildet wird, bei der eine Umfangsfläche (68) zur Prägefläche (62) in einem Kantenwinkel (65) kleiner als ein Kantenwinkel (71) zwischen der Anpressfläche (57) und der Umfangsfläche (68) der Vorsprünge (56) ist.

5. Verfahren nach einem der vorhergehenden Ansprüche, **dadurch gekennzeichnet, dass** die Lasche (23) mit einem textilen Material, vorzugsweise aus Monofilamenten, eingesetzt wird, welche einen Schmelzpunkt oder eine Erweichungstemperatur aufweist, die höher ist als der Schmelzpunkt oder die Erweichungstemperatur der zumindest einen äußeren Schicht (17) des Datenträgers (20) und durch die Sonotrode (52) ein Energieeintrag auf den Überlappungsbereich (30) angesteuert wird, sodass die zumindest eine äußere Schicht (17) des Datenträgers (20) zumindest anschmilzt und die Lasche (23) nicht erweicht.

6. Verfahren nach einem der vorhergehenden Ansprüche, **dadurch gekennzeichnet, dass** durch die Prägefläche (62) des Prägeelements (61) das aufgeschmolzene Material seitlich verdrängt und das textile Material durch die Prägefläche (62) des Prägeelements (61) im Überlappungsbereich perforiert wird.

7. Datenseite für ein buchartiges Dokument (11), mit einem Datenträger (20) und einer Lasche (23) aus einem textilen Material, die in einem Überlappungsbereich (30) durch Verschweißen miteinander verbunden sind, wobei zumindest eine äußere Schicht (32) des Datenträgers (20) zumindest teilweise Öffnungen (45) des textilen Materials der Lasche (23) füllt und eine Vielzahl von Verbindungsstellen zwischen dem textilen Material und der zumindest einen äußeren Schicht (32) des Datenträgers (20) gebildet ist, wobei im Überlappungsbereich (30) zusätzlich zur Vielzahl der Verbindungsstellen (59) zumindest eine Prägung (66) im textilen Material der Lasche (23) eingebracht ist, welches eine Sollbruchstelle (67) aufweist, **dadurch gekennzeichnet, dass** die zumindest eine Prägung (66) gegenüber den Verbindungsstellen (59) vertieft in dem Überlappungsbereich (30) eingebracht ist.

8. Datenseite nach Anspruch 7, **dadurch gekennzeichnet, dass** die Sollbruchstelle (67) entlang eines Randes der Prägung (66) gebildet ist, welches ergänzend zu einer Vielzahl von Verbindungsstellen (59) in das textile Material der Lasche (23) im Überlappungsbereich (30) eingebracht ist.

9. Datenseite nach Anspruch 7 oder 8, **dadurch gekennzeichnet, dass** die Prägung (66) teilweise oder vollständig von den Verbindungsstellen (59) zum Verbinden des textilen Materials der Lasche (23) mit der zumindest einen äußeren Schicht (32) des Datenträgers (20) umgeben ist.

10. Datenseite nach einem der Ansprüche 7 bis 9, **dadurch gekennzeichnet, dass** die Prägungen (66) als Zahlen, Buchstaben, Symbole, Bilder einzeln oder in Kombination ausgebildet sind.

11. Datenseite nach einem der Ansprüche 7 bis 10, **dadurch gekennzeichnet, dass** die zumindest eine äußere Schicht (32) des Datenträgers (20) aus einem Polymer aus einer Gruppe ausgewählt ist, welche Polycarbonat, insbesondere Bisphenol-A-Polycarbonat oder ein Polycarbonat gebildet mit einem Geminal Disubstituierten Bis (Hydroxphenyl(-cyloalkn), einem Polyethylenterephthalat (PET), deren Derivate, insbesondere glykolmodifiziertes PET (PETG) und/oder Polyvinylchlorid umfasst.

12. Datenseite nach einem der Ansprüche 7 bis 11, **dadurch gekennzeichnet, dass** das textile Material der Lasche (23) aus Polyamid, Acrylnitril-(co)-Polymerisat oder Glasfasern hergestellt ist.

## Claims

1. A method of fabricating a data page (17) for a book-like document (11),
- in which a data carrier (20) and a tab (23) made of a textile material are aligned with each other in such a manner that the tab (23) and the data carrier (20) overlap, forming an overlap region (30),
- in which an ultrasonic device (51) is used to interconnect the tab (23) and the data carrier (20) in said overlap region (30),
- in which a sonotrode (52) of the ultrasonic device (51), which has a plurality of protrusions (56) provided each with a pressing surface (57), acts on the tab (23) in the overlap region (30), and in which the data carrier (20) is supported by an anvil (53) of the ultrasonic device (51), with at least an outer layer (32) of the data carrier (20) being superficially melted so as to flow into the openings (48) of the textile material thus forming connection points (59).
- in which at least one embossing element (61) having an embossing surface (62) is applied to the textile material of the tab (23) within the overlap region (30) and at least one embossing (66) is introduced therein,
- with the cross-section of the textile material of the tab (23) being reduced at the position of the at least one embossing surface (62) of the at least one embossing element (61), **characterised in that** the sonotrode (52) is used to form a breaking point (67) in which the embossing surface (62) of the embossing element (61) protrudes from a work plane (64) formed by the respective pressing surfaces (57) of the protrusions (56), such that the embossing element (61) is higher than the protrusions, thus controlling displacement of a greater amount of molten material of the at least one outer layer (32) of the data carrier (20).

2. The method as claimed in claim 1, **characterised in that** using the sonotrode (52) which, in addition to the plurality of protrusions (56), comprises at least one embossing element (61), the connection point (59) is created and the at least one embossing (66) is introduced in the course of a common process step, or **in that**, using the sonotrode (52) which comprises only a plurality of protrusions (56), the connection point (59) in the overlap region (30) between the tab (23) and the outer layer (32) of the data carrier (20) is formed, and a sonotrode having the at least one embossing element (61) is applied to the overlap region (30) so as to introduce the at least one embossing (66) in a subsequent process step.

3. The method as claimed in claim 1, **characterised in that** the embossing surface (62) of the embossing element (61), which is larger than the pressing surface (57) of the protrusions (56), applies increased pressure on the tab (23) and on the data page (20) in the overlap region (30) and thus displaces the melted material of the at least one outer layer (17) of the data carrier (20) laterally towards the edge region of the embossing surface (62), and **in that** preferably a bead-shaped accumulation of material is formed outside of an embossing edge (63) of the embossing (66) by the melted and displaced material of the at least one outer layer of the data carrier (20).

4. The method as claimed in any of the preceding claims, **characterised in that** the embossing element (61) is formed with an embossing edge (65) in which a circumferential surface (68) forms an edge angle (65) with the embossing surface (62) which is smaller than an edge angle (71) between the pressing surface (57) and the circumferential surface (68) of the protrusions (56).

5. The method as claimed in any of the preceding claims, **characterised in that** the tab (23) is inserted with a textile material, preferably made of monofilaments, which has a melting point or a softening temperature that is higher than the melting point or the softening temperature of the at least one outer layer (17) of the data carrier (20), and **in that** an energy input into the overlap region (30) is triggered by the sonotrode (52), such that the at least one outer layer (17) of the data carrier (20) will at least superficially melt whereas the tab (23) will not soften.

6. The method as claimed in any of the preceding claims, **characterised in that** said melted material is laterally displaced by the embossing surface (62) of the embossing element (61) and **in that** the textile material is perforated, in the overlap region, by the embossing surface (62) of the embossing element (61).

7. A data page for a book-like document (11) having a data carrier (20) and a tab (23) made of a textile material which are joined together in the overlap region (30) by way of welding, with at least an outer layer (32) of the data carrier (20) filling at least partially openings (45) of the textile material of the tab (23) and a plurality of connection points being formed between the textile material and the at least one outer layer (32) of the data carrier (20), at least one embossment (66) being realised in the overlap region (30), in addition to the plurality of connection points (59), in the textile material of the tab (23), which has a breaking point (67), **characterised in that** the at least one embossment (66) is realised in the overlap region (30) in a recessed manner with respect to the connection points (59).

8. The data page as claimed in claim 7, **characterised in that** the breaking point (67) is formed along an edge of the embossment (66), which is realised, in addition to a plurality of connection points (59), in the textile material of the tab (23), in the overlap region (30).

9. The data page as claimed in claim 7 or 8, **characterised in that** the embossment (66) is surrounded partially or in its entirety by the connection points (59) for connecting the textile material of the tab (23) with the at least one outer layer (32) of the data carrier (20).

10. The data page as claimed in any one of claims 7 to 9, **characterised in that** the embossments (66) are realised as numbers, letters, symbols, images, either individually or in the form of combinations of the latter.

11. The data page as claimed in any one of claims 7 to 10, **characterised in that** the at least one outer layer (32) of the data carrier (20) is selected from among a group of polymers comprising polycarbonate, in particular bisphenol-A-polycarbonate or polycarbonate formed with a geminally disubstituted bis-(hydroxyphenyl)-cycloalkane, a polyethylene terephthalate (PET), its derivatives and/or polyvinyl chloride.

12. The data page as claimed in any one of claims 7 to 11, **characterised in that** the textile material of the tab (23) is made of polyamide, acrylonitrile-(co)-polymerisate, or glass fibres.

## Revendications

1. Procédé destiné à fabriquer une page de données (17) pour un document (11) de type livret,
- lors duquel un support de données (20) et une patte (23) en un matériau textile sont orientés l'un vers l'autre de sorte que la patte (23) et le support de données (20) se chevauchent dans une zone de chevauchement (30),
- lors duquel la patte (23) et le support de données (20) sont assemblés l'un à l'autre dans la zone de chevauchement (30) grâce à un dispositif ultrasonique (51),
- lors duquel une sonotrode (52) du dispositif ultrasonique (51) qui présente une pluralité de saillies (56) pourvues d'une surface de pression (57) permet d'agir sur la patte (23) au niveau de la zone de chevauchement (30) et que le support de données (20) est soutenu par une enclume (53) dudit dispositif ultrasonique (51), au moins une couche extérieure (32) du support de données (20) subissant une fusion superficielle et pénétrant au moins en partie dans les ouvertures (48) du matériau textile, formant ainsi des points de jonction (59),
- lors duquel au moins un élément d'estampage (61) pourvu d'une surface d'estampage (62) est amené sur le matériau textile de la patte (23), à l'intérieur de la zone de chevauchement (30), et au moins une empreinte (66) est réalisée,
- la section transversale du matériau textile de la patte (23) se trouvant réduite à l'endroit où se situe ladite au moins une surface d'estampage (62) dudit au moins un élément d'estampage (61), **caractérisé en ce que** la sonotrode (52) est utilisée en vue de former un point destiné à la rupture (67) au niveau duquel la surface d'estampage (62) de l'élément d'estampage (61) dépasse d'un plan de travail (64) formé par la surface de pression (57) respective des saillies (56) de sorte que l'élément d'estampage (61) est plus haut que les saillies, ce qui provoque un refoulement accru du matériau superficiellement fondu de ladite au moins une couche extérieure (32) du support de données (20).

2. Procédé selon la revendication 1, **caractérisé en ce que** la formation du point de jonction (59) et la réalisation de ladite au moins une empreinte (66) ont lieu dans une seule et même étape de travail grâce à la sonotrode (52) qui comprend, outre la pluralité de saillies (56), au moins un élément d'estampage (61), ou **en ce que** le point de jonction (59) est formé dans la zone de chevauchement (30), entre la patte (23) et la couche extérieure (32) du support de données (20) grâce à la sonotrode (52) qui comprend seulement une pluralité de saillies (56), et que, dans une étape de travail suivante, une sonotrode pourvue dudit au moins un élément d'estampage (61) est amenée à la zone de chevauchement (30) et que ladite au moins une empreinte (66) est réalisée.

3. Procédé selon la revendication 1, **caractérisé en ce que**, grâce à la surface d'estampage (62) de l'élément d'estampage (61) qui est plus grande que la surface de pression (57) des saillies (56), une pression accrue est appliquée, au niveau de la zone de chevauchement (30), sur la patte (23) et sur la page de données (20), et **en ce que** le matériau superficiellement fondu de ladite au moins une couche extérieure (17) du support de données (20) est refoulé de manière latérale vers la zone périphérique de la surface d'estampage (62), et **en ce qu'**une accumulation de matériau en forme de bourrelet est formée de préférence à l'extérieur d'une arête d'estampage (63) de l'empreinte (66) par le matériau superficiellement fondu et refoulé de ladite au moins une couche extérieure du support de données (20).

4. Procédé selon l'une quelconque des revendications précédentes, **caractérisé en ce que** l'élément d'estampage (61) est réalisé de manière à présenter une arête d'estampage (65) dont la surface circonférentielle (68) forme un angle d'arête (65) par rapport à la surface d'estampage (62) qui est inférieur à un angle d'arête (71) entre la surface de pression (57) et la surface circonférentielle (68) des saillies (56).

5. Procédé selon l'une quelconque des revendications précédentes, **caractérisé en ce que** la patte (23) utilisée est pourvue d'un matériau textile, constitué de préférence de monofilaments, et présente un point de fusion ou une température de ramollissement qui est supérieur(e) au point de fusion ou à la température de ramollissement de ladite au moins une couche extérieure (17) du support de données (20), et **en ce qu'**un apport d'énergie est effectué par la sonotrode (52) sur la zone de chevauchement (30), de sorte que ladite au moins une couche extérieure (17) du support de données (20) subit au moins une fusion superficielle et que la patte (23) n'est pas ramollie.

6. Procédé selon l'une quelconque des revendications précédentes, **caractérisé en ce que** le matériau superficiellement fondu est refoulé de manière latérale par la surface d'estampage (62) de l'élément d'estampage (61) et que le matériau textile est perforé dans la zone de chevauchement par la surface d'estampage (62) de l'élément d'estampage (61).

7. Page de données pour un document (11) de type livret pourvue d'un support de données (20) et d'une patte (23) en un matériau textile lesquels sont assemblés l'un à l'autre par soudage dans une zone de chevauchement (30), au moins une couche extérieure (32) du support de données (20) remplissant au moins en partie des ouvertures (45) du matériau textile de la patte (23) et une pluralité de points de jonction étant formée entre le matériau textile et ladite au moins une couche extérieure (32) du support de données (20), dans ledit matériau textile de la patte (23) pourvu d'un point destiné à la rupture (67) étant réalisée, au niveau de la zone de chevauchement (30), au moins une empreinte (66) en plus de la pluralité des points de jonction (59), **caractérisée en ce que** ladite au moins une empreinte (66) est réalisée dans la zone de chevauchement (30) à un niveau surbaissé par rapport aux points de jonction (59) .

8. Page de données selon la revendication 7, **caractérisée en ce que** le point destiné à la rupture (67) est formé le long d'un bord de l'empreinte (66) qui est réalisée dans le matériau textile de la patte (23) au niveau de la zone de chevauchement (30) de manière complémentaire à une pluralité de points de jonction (59).

9. Page de données selon la revendication 7 ou 8, **caractérisée en ce que** l'empreinte (66) est entourée en partie ou complètement par les points de jonction (59) destinés à assembler le matériau textile de la patte (23) à ladite au moins une couche extérieure (32) du support de données (20).

10. Page de données selon l'une quelconque des revendications 7 à 9, **caractérisée en ce que** les empreintes (66) sont réalisées, de manière séparée ou combinée, en tant que nombres, lettres, symboles, images.

11. Page de données selon l'une quelconque des revendications 7 à 10, **caractérisée en ce que** ladite au moins une couche extérieure (32) du support de données (20) est choisie parmi un polymère tiré du groupe qui comprend du polycarbonate, en particulier du polycarbonate de bisphénol-A ou un polycarbonate formé avec un bis-(hydroxyphényl)-cycloalcane disubstitué de manière géminée, un polyéthylène-téréphtalate (PET), ses dérivés, en particulier du PET modifié au glycol (PET-G) et/ou du chlorure de polyvinyle.

12. Page de données selon l'une quelconque des revendications 7 à 11, **caractérisée en ce que** le matériau textile de la patte (23) est constitué en polyamide, en (co)polymérisat d'acrylonitrile ou en fibres de verre.
